# EUROPEAN PATENT SPECIFICATION

(11) **EP 2 140 206 B1**
(45) Date of publication and mention of the grant of the patent: **31.05.2017**
(21) Application number: 08747913.5
(22) Date of filing: 08.04.2008
(51) Int. Cl.: F24D 17/00, F24H 1/08, F24H 9/20, F24D 19/10, F24H 1/18, G12B 13/00, A47J 31/56, F24H 1/20

(54) **IMPROVEMENTS IN WATER HEATERS**
VERBESSERTER WARMWASSERBEREITER
AMÉLIORATIONS DE CHAUFFE-EAU

(30) Priority: 13.04.2007 AU 2007901960 P
(43) Date of publication of application: 06.01.2010
(73) Proprietor: Rheem Australia PTY Limited, Rydalmere, NSW 2116 (AU)
(72) Inventor: TROUTE, Patrick, Auckland, 1011 (NZ); ECHTNER, George, Woronora Heights New South Wales (AU)
(74) Representative: Lenne, Laurence
(86) International application number: PCT/AU2008/000500
(87) International publication number: WO 2008/124865

(56) References cited:
- EP-A1- 0 267 649
- EP-A1- 0 380 369
- WO-A1-2005/088205
- JP-A- 08 089 405
- JP-A- 10 314 030
- JP-A- 58 193 026
- DATABASE WPI Week 200370, Derwent Publications Ltd., London, GB; Class Q74, AN 2003-734759, XP008114283 & JP 2002 243276 A (TOSHIBA CAREER KK) 28 August 2002
- DATABASE WPI Week 200457, Derwent Publications Ltd., London, GB; Class Q74, AN 2004-587948, XP008114284 & JP 2004 233002 A (NIPPONDENSO CO LTD) 19 August 2004
- DATABASE WPI Week 200660, Derwent Publications Ltd., London, GB; Class Q74, AN 2006-580372, XP008114285 & JP 2006 200806 A (MATSUSHITA DENKI SANGYO KK) 03 August 2006

## Description

### Field of the invention

This invention relates to water heaters and methods of control thereof.

The invention is applicable to water heaters which are operated at an upper temperature threshold, such as boiling water heaters for providing hot water for beverages.

### Background of the invention

Boiling water heaters are usually used to provide hot water for beverages and are required to provide water at close to boiling point. However, the boiling point for water depends on the atmospheric pressure, which can vary according to factors such as weather conditions and altitude. In addition, minimization of power consumption is now an important factor for equipment suppliers and consumers. Having a continuously boiling heater is wasteful of energy, and generates steam which can also be unacceptable for the user. Thus it is now the practice of boiling water heater suppliers to provide a heater which heats the water to a temperature threshold a degree or two below the boiling point. This necessitates the calibration of the heater to the local boiling temperature. Other refinements, such as the ramping down of the temperature as the water approaches the boiling point have also been adopted to prevent temperature overrun from the thermal inertia of the element.

### Summary of the invention

According to an embodiment of the invention, there is provided a method of calibrating a water heater, the method including the steps of:
A. adding water to the tank to a first predetermined water level;
B. heating the water to a first temperature threshold;
C. maintaining the temperature at approximately the first temperature threshold for a first period of time;
D. heating the water until the rate of temperature change is less than a first predetermined rate;
E. measuring the temperature (T1) when the state of step D is achieved to determine a first iteration temperature.
F. measuring the time for the water to reach the state of step E, and
G. comparing the time with a third predetermined time period.
The method can include the step of:
H. recording the first iteration temperature measured at step E as the boiling point.

The method can include the steps of:
I. reducing the power to the element to a level sufficient to maintain the water at the first iteration temperature for a second predetermined period (8 min);
J. applying full power to the element until the state of step D is achieved;
K. measuring the temperature attained at step J;
L. recording the temperature attained measured at step J as the boiling point, wherein steps J, K, and L are carried out instead of or subsequent to, step F.

The method can include the steps of:
M. measuring time to achieve step D,
N. comparing the time measured at step M with a third time period; and, if the time measured at M exceeds the third time period,
O. measuring the water temperature at the end of the third time period;
P. recording the water temperature measured at step O as the boiling point.

The first predetermined water level may be less than the full level.

The first predetermined water level may be at a predetermined height above the element.

The invention also provides a controller for implementing the method, and a water heater including such a controller.

### Brief description of the drawings

An embodiment or embodiments of the present invention will now be described, by way of example only, with reference to the accompanying drawings, in which:
Figure 1 is shows a functional schematic drawing of a boiling water heater embodying the invention;
Figure 2 is a functional block diagram illustrative of functional elements of a controller adapted for use with the present invention; and
Figure 3 is a flow diagram of a first mode of operation of the boiling water heater.
Figure 4 is a flow diagram of both the first and second mode of operation of the boiling water heater.

The following reference numbers are used in the drawings:

| **FIGURE 1** | | **FIGURE 2** | | **FIGURE 3** | |
|---|---|---|---|---|---|
| | | | | | |
| 100 | TANK | 200 | CONTROLLER | 302 | ADD WATER |
| 102 | WATER | 202 | PROCESSOR | 304 | HEAT |
| 104 | ELEMENT | 204 | BUS | 306 | MEASURE TEMP |
| 106 | SWITCH | 206 | NVRAM | 308 | COMPARE TEMP |
| 108 | VALVE | 208 | ROM | 310 | REDUCE HEAT |
| 110 | WATER INLET | 210 | INPUT I/F | 312 | START TIMER |
| 112 | LEVEL SENSOR 1 | 212 | LEVEL SENSOR | 314 | TIME |
| 113 | LEVEL SENSOR 2 | 213 | UPPER LEVEL SENSOR | 316 | FULL HEAT |
| 114 | OUTLET | 216 | TEMP SENSOR | 318 | TEMP/TIME |
| 116 | TEMP SENSOR 1 | 218 | SCRATCH PAD | 320 | MEASURE TEMP |
| 118 | TEMP SENSOR 2 | 220 | OUTPUT INTERFACE | 322 | STORE TEMP |
| 120 | CONTROLLER | 222 | DISPLAY I/F | | |
| 122 | DISPLAY | 224 | KEYPAD I/F | | |
| 124 | KEYPAD | 226 | SWITCH | | |
| | | 228 | VALVE | | |
| | | 230 | CLOCK | | |

| **FIGURE 4** | | | | | |
|---|---|---|---|---|---|
| 402 | ADD WATER | | | | |
| 404 | HEAT | | | | |
| 406 | MEASURE TEMP | | | | |
| 408 | COMPARE TEMP | | | | |
| 410 | REDUCE HEAT | | | | |
| 412 | START TIMER | | | | |
| 414 | TIME | | | | |
| 416 | FULL HEAT | | | | |
| 418 | TEMP/TIME | | | | |
| 420 | MEASURE TEMP | | | | |
| 424 | TIME | | | | |
| 426 | FULL HEAT | | | | |
| 428 | TEMP/TIME | | | | |
| 430 | MEASURE TEMP | | | | |
| 432 | STORE TEMP | | | | |

### Detailed description of the embodiments

The invention will be described with reference to a boiling water heater.

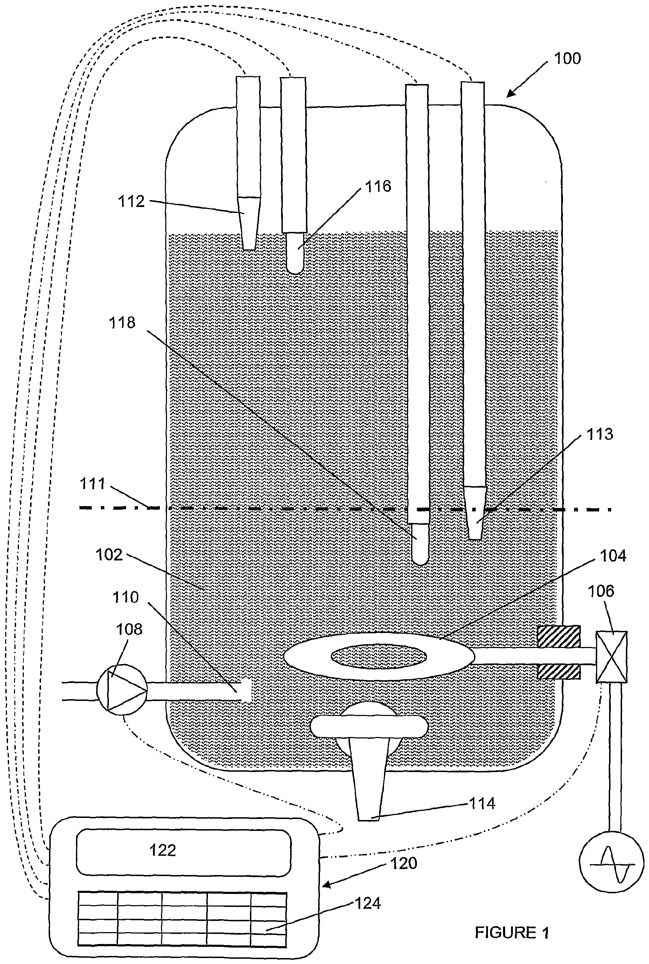

Figure 1 shows a boiling water heater controlled by a method implementing an embodiment of the invention.

As shown in Figure 1, the tank 100 contains water 102 which has been admitted to the tank at inlet 110 via control valve 108. A first level sensor 113 is provided to determine when there is a first predetermined level of water in the tank. A second level sensor 112 is provided to indicate to controller 120 when the water has reached the full position. Controller 120 then turns off the valve 108 and stops the water entering the tank 100.

Additional level sensors can be provided to determine when intermediate levels are reached. For example, a third level sensor can be provided to indicate that a minimum level of water is present above the element 104. Thus, if the water level is below this minimum level, the element 104 is inhibited by controller 120 from being turned on. A further level sensor can be provided to indicate when the water has fallen below a level at which the controller is programmed to initiate refill. This can prevent the refill starting immediately water is drawn off.

A continuous level monitor can be provided in the form of a pair of capacitor plates running from the upper level to the bottom of the tank or the minimum level. The capacitance varies with the amount of water between the plates. The capacitance can be measured by known techniques such as applying a HF signal and calculating the capacitance from the measured parameters and adjusting for temperature effects on the dielectric characteristics of the water. The capacitor plates can be formed as concentric cylindrical surfaces with a space between which fills with water to the height of the water in the tank.

One or more temperature sensors 116, 118 measure the temperature of the water in the tank. Where more than one temperature sensors is provided, they can be located at differing heights within the tank 100. For example, a sensor can be located proximate the minimum water level below which the controller 120 inhibits the element 104. The temperature sensor 116 is located below the fill level. The temperature sensor 118 is located below the predetermined level detected by level detector 113.

Water can be drawn off via tap 114.

The controller 120 can include a display 122 and a user interface such as keypad 124. Other interfaces such as touch screen, infrared or wireless interfaces can also be used.

The controller 120 can be provided with a scrollable function menu which the user can control by one or more function buttons.

The controller 120 receives input signals from the temperature sensors 116, 118, and from the levels sensors 112, 113. In response to the input conditions meeting operating criteria, the controller controls the inlet valve 108 and the power switch 106.

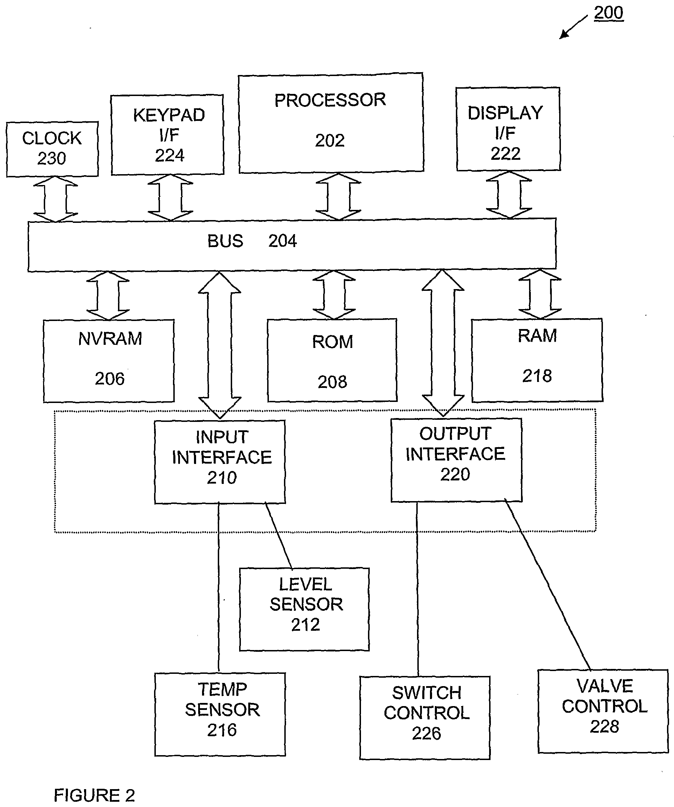

Figure 2 schematically illustrates a functional block diagram of a controller adapted for use with the inventive heater.

A processor 202 and its peripheral elements are interconnected by a bus 204. The controller included, for example, a ROM 208 adapted to store programming for the processor 202, an NVRAM 206, a scratch pad memory 218 a clock 230, a user input interface such as keypad interface 224, a display interface 222. In addition input interface 210 and output interface 220 are connected to the processor via the bus 204.

The level sensors and temperature sensors are connected to the input interface 210, and the control outputs for the switch control 226 and the valve control 228 are connected to the output interface 220.

The input interface and the output interface can be part of a common interface such as a USB interface.

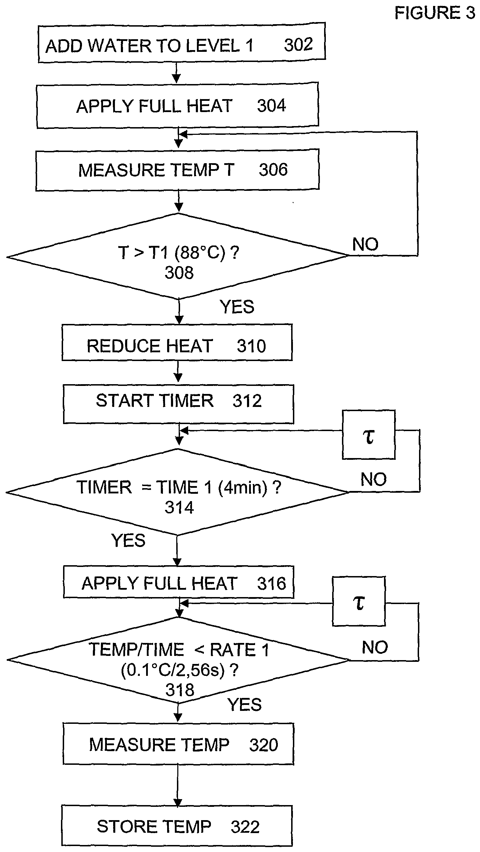

Figure 3 is a flow diagram of a first mode of operation of the boiling water heater.

In a first step 302, water is added to tank 100 to a predetermined level, such as the level 111 determined by level sensor 113 and the water inlet is then shut off. Full heat is then applied at step 304 via the heating element 104 and the temperature is monitored at step 306 until it reaches a first predetermined temperature threshold T1 (308), which, in this embodiment has been chosen as 88°C. A thermostat can be used to maintain this temperature. When T1 is reached, the power supplied by the element 104 is reduced to a level sufficient to maintain the temperature at approximately at T1 at step 310. This can be done by reducing the duty cycle of the heating element 104, ie, by switching the element on and off for periods of time to reduce the average power delivered by the element 104.

A timing function is initiated at step 312 when the temperature reaches T1 and the temperature is held at T1 for a predetermined period, for example, 4 minutes (314).

Thereafter, at step 316, full heat is again reapplied and the rate of temperature change is monitored at step 318 until it falls to a threshold rate, 0.1C/2.56 sec in this embodiment.

The rate can be measured for a number of iterations, eg, 8 samples at 2.56 sec intervals at step 318, and when the rate is below the threshold rate for 8 successive samples, the temperature is measured at step 320. This temperature is taken to be the boiling point and is stored in a memory. This can be volatile memory 218 or non-volatile memory 206.

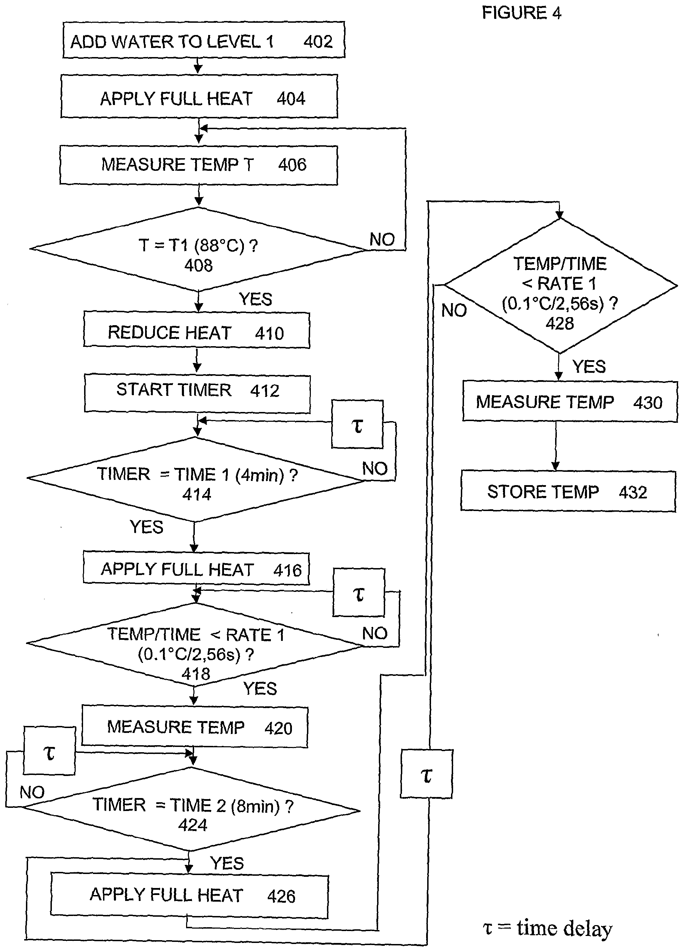

According to a further embodiment of the invention, shown in Figure 4, steps 302 to 320 are repeated as steps 402 to 420. Steps 322 can optionally be repeated. The temperature is measured at 420. Then at step 424, this is held for a time period, in this embodiment 8 minutes. Full heat is then applied at 426, and the temperature change rate monitored at 428 until a predetermine rate is reached, again 0.1C/2.56 sec is chosen in this embodiment. The temperature is measured at step 430 and stored in memory at step 432. Preferably, this temperature is stored in non-volatile memory 206.

The double calibration including both steps 302 to 322 and 424 to 432 assist in providing consistent and repeatable calibration temperatures. In particular, this process can be applied across a range of boiling water heaters, for example, 3 to 40 litre capacities.

This calibration process can be carried out when the heater has not been previously calibrated.

Following step 318 or 418, the water should boil at greater than 92°C. Preferably the system can be set to require that the element has been at full power for greater than a further predetermined period, such as 1 minute.

In the event that boiling is not detected at 318,418 or 428, the timer will run for a further predetermined time period, say 10 minutes, and the temperature then recorded will be taken as the boiling point. This time period commences when the temperature exceeds a selected threshold value such as 92°C for mode 1 operation (i.e. 318 & 418) and for mode 2 operation after the 8 minute time period (i.e. 424).

When the heater has been calibrated, incremental filling from level 111 to the full level commences as the controller 120 opens valve 108. In this process, water is added until the temperature falls below a chosen value while the heater is at full power. When the water temperature falls to the chosen value, the water inlet is shut off by the controller closing valve 108 and is held closed until the temperature rises to a value within an acceptable temperature range suitable for use with hot beverages. This process is repeated until the full level is reached.

A calibration reset button can be provided on the controller. This can be used to initiate a calibration process by selecting the calibration item from the menu on the display 122. On initial start up, the unit will calibrate at a low water level, but once commissioned the unit can be re-calibrated anywhere between low level and high level by activating the relevant push buttons.

Where ever it is used, the word "comprising" is to be understood in its "open" sense, that is, in the sense of "including", and thus not limited to its "closed" sense, that is the sense of "consisting only of'. A corresponding meaning is to be attributed to the corresponding words "comprise", "comprised" and "comprises" where they appear.

While particular embodiments of this invention have been described, it will be evident to those skilled in the art that the present invention may be embodied in other specific forms without departing from the essential characteristics thereof. The present embodiments and examples are therefore to be considered in all respects as illustrative and not restrictive, and all modifications within the scope of protection as defined in the claims are therefore intended to be embraced therein.

## Claims

1. A method of calibrating a water heater, the method including the steps of:
A. adding water to the tank to a first predetermined water level (402);
B. heating the water to a first temperature threshold (404, 408, 410);
C. maintaining the temperature at approximately the first temperature threshold for a first period of time (414);the method being **characterized in that** these steps are followed by
D. heating the water until the rate of temperature change is less than a first predetermined rate (416, 418);
E. measuring the temperature (T1) of the water when the state of step D is achieved to determine a first iteration temperature (420);
F. measuring the time for the water to reach the state of step E (420), and
G. comparing the time with a third predetermined time period (428).

2. A method as claimed in claim 1, including the step of:
H. recording the first iteration temperature measured at step E as the boiling point.

3. A method as claimed in any one of the preceding claims, including the steps of:
1. reducing the power to the element to a level sufficient to maintain the water at the first iteration temperature for a second predetermined period (8 min) (424);
J. applying full power to the element until the state of step D is achieved (426);
K. measuring the temperature attained at step J;
L. recording the temperature attained measured at step J as the boiling point, wherein steps J, K, and L are carried out instead of or subsequent to, step F.

4. A method as claimed in claim 3, including the steps of
M. measuring time to achieve step J ,
N. comparing the time measured at step M with said third time period (428); and, if the time measured at M exceeds the third time period,
O. measuring the temperature at the end of the third time period;
P. recording the temperature measured at step O as the boiling point.

5. A method as claimed in any one of the preceding claims, wherein the first predetermined water level is less than the full level.

6. A method as claimed in claim 5, wherein the first predetermined water level is at a predetermined height above the element.

7. A controller for a boiling water heater, the controller including a processor programmed to implement the method of any one of claims 1 to 6.

8. A boiling water heater including a controller as claimed in claim 7.

## Patentansprüche

1. Verfahren zum Kalibrieren eines Durchlauferhitzers, wobei das Verfahren die folgenden Schritte enthält:
A. Zusetzen von Wasser zu dem Tank bis auf einen ersten vorbestimmten Wasserstand (402);
B. Erhitzen des Wassers auf einen ersten Temperaturgrenzwert (404, 408, 410);
C. Aufrechterhalten der Temperatur bei ungefähr dem ersten Temperaturgrenzwert für einen ersten Zeitraum (414);
wobei das Verfahren **dadurch gekennzeichnet ist, dass** diese Schritte gefolgt werden von dem
D. Erhitzen des Wassers, bis die Rate der Temperaturveränderung weniger als eine erste vorbestimmte Rate (416, 418) beträgt;
E. Messen der Temperatur (T1) des Wassers, wenn der Zustand von Schritt D erreicht ist, um eine erste Wiederholungstemperatur (420) zu bestimmen;
F. Messen der Zeit, in der das Wasser den Zustand von Schritt E (420) erreicht hat und
G. Vergleichen der Zeit mit einem dritten vorbestimmten Zeitraum (428).

2. Verfahren nach Anspruch 1, einschließlich dem folgenden Schritt:
H. Aufzeichnen der ersten Wiederholungstemperatur, die an Schritt E als der Siedepunkt gemessen wurde.

3. Verfahren nach einem der vorstehenden Ansprüche, einschließlich den folgenden Schritten:
I. Reduzieren der Stromzufuhr an das Element auf einen Wert, der ausreichend ist, um das Wasser bei der ersten Wiederholungstemperatur für einen zweiten vorbestimmten Zeitraum (8 min) (424) aufrechtzuerhalten;
J. Anlegen einer vollständigen Stromzufuhr an das Element, bis der zustand von Schritt D erreicht worden ist (426);
K. Messen der in Schritt J erreichten Temperatur;
L. Aufzeichnen der in Schritt J als der Siedepunkt erhaltenen, gemessenen Temperatur, wobei Schritte J, K und L anstelle von oder anschließend an Schritt F durchgeführt werden.

4. Verfahren nach Anspruch 3, einschließlich die folgenden Schritte:
M. Messen der Zeit, die benötigt wird, um Schritt J zu erreichen,
N. Vergleichen der Zeit, die in Schritt M gemessen wird, mit dem dritten Zeitraum (428); und, falls die in M gemessene Zeit den dritten Zeitraum übersteigt,
O. Messen der Temperatur am Ende des dritten Zeitraums;
P. Aufzeichnen der in Schritt O als der Siedepunkt gemessenen Temperatur.

5. Verfahren nach einem der vorstehenden Ansprüche, wobei der erste vorbestimmte Wasserstand weniger als der vollständige Stand beträgt.

6. Verfahren nach Anspruch 5, wobei sich der erste vorbestimmte Wasserstand in einer vorbestimmten Höhe oberhalb des Elements befindet.

7. Steuergerät für einen Durchlauferhitzer, wobei das Steuergerät einen Prozessor beinhaltet, der derart programmiert ist, um das Verfahren nach einem der Ansprüche 1 bis 6 zu implementieren.

8. Durchlauferhitzer, einschließlich einem Steuergerät nach Anspruch 7.

## Revendications

1. Procédé d'étalonnage d'un chauffe-eau, le procédé comprenant les étapes suivantes :
A. l'ajout d'eau dans le réservoir jusqu'à un premier niveau d'eau prédéterminé (402) ;
B. le chauffage de l'eau à un premier seuil de température (404, 408, 410) ;
C. le maintien de la température approximativement au premier seuil de température pendant un premier laps de temps (414) ;
le procédé étant **caractérisé en ce que** ces étapes sont suivies des étapes suivantes :
D. le chauffage de l'eau jusqu'à ce que le taux de variation de la température soit inférieur à un premier taux prédéterminé (416, 418) ;
E. la mesure de la température (T1) de l'eau une fois que l'état de l'étape D a été atteint pour déterminer une première température d'itération (420) ;
F. la mesure du temps que met l'eau pour atteindre l'état de l'étape E (420), et
G. la comparaison de ce temps avec un troisième laps de temps prédéterminé (428).

2. Procédé selon la revendication 1, comprenant l'étape suivante :
H. l'enregistrement de la première température d'itération mesurée à l'étape E en tant que point d'ébullition.

3. Procédé selon l'une quelconque des revendications précédentes, comprenant les étapes suivantes :
I. la réduction de la puissance fournie à l'élément à un niveau suffisant pour maintenir l'eau à la première température d'itération pendant un deuxième laps de temps prédéterminé (8 min) (424) ;
J. l'application de la pleine puissance à l'élément jusqu'à ce que l'état de l'étape D ait été atteint (426) ;
K. la mesure de la température atteinte à l'étape J ;
L. l'enregistrement de la température atteinte mesurée à l'étape J en tant que point d'ébullition, les étapes J, K et L étant effectuées à la place ou à la suite de l'étape F.

4. Procédé selon la revendication 3, comprenant les étapes suivantes :
M. la mesure du temps nécessaire pour réaliser l'étape J,
N. la comparaison du temps mesuré à l'étape M avec ledit troisième laps de temps (428) ;
et, si le temps mesuré à M est supérieur au troisième laps de temps,
0. la mesure de la température à la fin du troisième laps de temps ;
P. l'enregistrement de la température mesurée à l'étape 0 en tant que point d'ébullition.

5. Procédé selon l'une quelconque des revendications précédentes, dans lequel le premier niveau d'eau prédéterminé est inférieur au plein niveau.

6. Procédé selon la revendication 5, dans lequel le premier niveau d'eau prédéterminé est à une hauteur prédéterminée au-dessus de l'élément.

7. Dispositif de commande pour un chauffe-eau à eau bouillante, le dispositif de commande comprenant un processeur programmé pour mettre en oeuvre le procédé selon l'une quelconque des revendications 1 à 6.

8. Chauffe-eau à eau bouillante comprenant un dispositif de commande selon la revendication 7.
